# EUROPEAN PATENT SPECIFICATION

(11) **EP 4 401 267 B1**
(45) Date of publication and mention of the grant of the patent: **29.04.2026**
(21) Application number: 23151057.9
(22) Date of filing: 11.01.2023
(51) Int. Cl.: H02J 3/36, H02J 1/08, H02M 7/72

(54) **BIPOLE POWER EXCHANGE ARRANGEMENT AND A METHOD FOR OPERATING THEREOF**
ZWEIPOLIGE STROMAUSTAUSCHANORDNUNG UND VERFAHREN ZUM BETRIEB DAVON
AGENCEMENT D'ÉCHANGE DE PUISSANCE BIPOLAIRE ET SON PROCÉDÉ DE FONCTIONNEMENT

(43) Date of publication of application: 17.07.2024
(73) Proprietor: Siemens Energy Global GmbH & Co. KG, 81739 München (DE)
(72) Inventor: WESTERWELLER, Thomas, 96135 Stegaurach (DE)

(56) References cited:
- BERNE E ET AL: "Earth currents in HVDC grids: An example based on 5 terminal bipolar configurations", 2014 16TH EUROPEAN CONFERENCE ON POWER ELECTRONICS AND APPLICATIONS, IEEE, 26 August 2014 (2014-08-26), pages 1 - 10, XP032651262, DOI: 10.1109/EPE.2014.6910729

## Description

The present invention relates to a bipole power exchange arrangement designed to exchange power between a power source and a DC network, comprising a first converter arranged between a positive DC pole and a neutral DC pole, a second converter arranged between the neutral DC pole and a negative DC pole, and a converter control providing a first converter voltage reference for the first converter and a second converter voltage reference for the second converter. The present invention further relates to a method for operating such arrangement.

In a bipolar HVDC system the pole currents returning in the neutral path shall cancel out each other. Imbalances and/or contingencies often result in a significant amount of current in the neutral system. A technical challenge of a HVDC grid is the control of theses currents.

It is known to control the current injected by a single converter station to zero using local setpoint controls (i.e., controls with integral part) which manipulate the power/current orders of the individual poles. Under symmetrical operating conditions the control establishes current balancing between the two poles to minimize the currents injected into the neutral return system. When a bipole HVDC station needs to be operated in an asymmetrical way (different voltages at both DC poles), these controls are deactivated, and the individual power dispatch of each pole forces the currents into the neutral system. Instantaneous coordination between several HVDC stations of a corresponding HVDC network is necessary to react to unexpected contingencies.

Known solutions assume a limited set of contingencies and are based on the prerequisite that fast changes to the control behavior of individual network elements by centralized regulations is possible at any time. In many HVDC grid applications this approach is not favorable.

A specific prior art example corresponds to the article by Berne E. et al. titled "Earth currents in HVDC grids: An example based on 5 terminal bipolar configurations", published on 26 August 2014 in the context of the 2014 16TH EUROPEAN CONFERENCE ON POWER ELECTRONICS AND APPLICATIONS, IEEE(DOI: 10.1109/EPE.2014.6910729). Its disclosure comprises bipolar VSC HVDC stations whose control involves the generation of a respective voltage reference for the converter of each of the poles, said each references formed by the sum of a first element and a second one, said second element being output by a ground current control implemented as a PI.

It is therefore an object of the present invention to provide an aforementioned arrangement and a method for operating thereof which allows a reliable operation, particularly in case of the above-mentioned asymmetries.

According to a first aspect, the object is achieved by a method according to claim 1.

According to a second aspect, the object is achieved by an arrangement according to claim 7.

According to the first aspect of the invention, the bipole power exchange arrangement comprises a first converter arranged between a positive DC pole and a neutral DC pole, a second converter arranged between the neutral DC pole and a negative DC pole, and a converter control providing a first converter voltage reference for the first converter and a second converter voltage reference for the second converter. The arrangement is configured to exchange power between a power source and a DC network. The converters can be for example AC-DC converters, each having an AC side connected to an AC grid as a power source. According to another example the power source can be or comprise an energy storage device, wherein the converters are DC-DC converters connected to a DC output of the energy storage device. A DC network (DC grid) usually comprises one or several connected DC lines and DC operating equipment, such as converters (AC/DC and/or DC/DC), energy storage devices, DC choppers, DC cables, DC overhead lines (or cables), DC circuit breakers, energy sources (e.g., PV plants) and suitable loads. The present invention particularly relates to high-voltage networks, i.e., networks with a nominal voltage of more than 100 kV DC. In contrast to point-to-point HVDC connections, HVDC multi-terminal or meshed systems generally have the task of connecting more than one DC line(s) and more than two AC/DC converters.

The converter voltage references each comprise at least two additive components, wherein one of the components is a residual voltage reference calculated using a droop control function based on a neutral pole current, and wherein a second additive component of the first converter voltage reference is a first symmetrical voltage reference and a second additive component of the second converter voltage reference is a second symmetrical voltage reference, wherein the absolute values of the first and second symmetrical components are equal. In other words, the first converter voltage reference is a sum of at least a first component and a second component, wherein the first component is the residual voltage reference. The residual voltage reference is obtained using a droop control mechanism. This means that a current-voltage characteristics is used to compute a functional dependency between the neutral pole current and the residual voltage reference. The symmetrical voltage references represent the voltage references for the symmetrical operation of the power exchange arrangement. They are based on the power demand given by higher-level controls.

The residual voltage droop control (suitably implemented at each converter station) adds an unbalance (i.e., a residual) component to the balanced power target of the direct voltage node controls (i.e., voltage dependent droop control of bipolar power/current). This allows the HVDC grid to converge to a new equilibrium after disturbances without intervention of a higher hierarchy grid control (e.g., on transmission system operator (TSO) level). Further refinement of this equilibrium is achieved by coordinating the element level control parameters from the TSO level. The method according to the invention provides thus a robust solution to ensure network stability. By separating the converter control into balanced control (for power control) and residual control (for neutral current control) both control goals are decoupled for a wide range of grid conditions. Intervention of TSO-level controls is not necessary for ensuring grid stability.

In case one of the power exchange arrangements in the DC network are forced into an asymmetric current infeed, other power exchange arrangements of the same DC network will have to react with their (local) controls to adapt to this asymmetry. Preselected droop patterns for all power exchange arrangements in the DC network can be used to pre-determine possible sharing fractions between the power exchange arrangements in case of a sudden contingency. As soon as the contingency is reported to the grid control level, the HVDC grid control can adapt the targets to re-establish the desired return current sharing.

Suitably, the droop control function is chosen such that the residual voltage reference is equal to zero if the neutral pole current is equal to zero. As long as a measured current in the neutral pole is equal to zero (or suitable near zero, if a dead band for the control function is used), the residual balancing is not activated.

According to an aspect of the invention, the residual voltage reference is calculated based on a neutral pole voltage, in addition to the neutral pole current.

Suitably, the symmetrical voltage references are calculated using a DC voltage-power droop control function.

According to an aspect of the invention, the converter control further comprises a local power adaption control for adjusting a power demand to short-term changes in local power generation. The goal of the power adaption control is to react autonomously to unscheduled load-flow changes in the grid. A given target from operation level is hereby manipulated by local controls.

According to another aspect of the invention, a bipole power exchange arrangement is provided. The power exchange arrangement is designed to exchange power between a power source and a DC network and comprises a first converter arranged between a positive DC pole and a neutral DC pole, a second converter arranged between the neutral DC pole and a negative DC pole, and a converter control configured to operate the arrangement according to any aspect of the above-described method.

The first converter (and/or the second converter) can be a modular multilevel converter. A modular multilevel converter comprises in each of its converter valves a series connection of switching modules. Each switching module comprises controllable switching devices (e.g., IGBTs) and a separate energy storage (e.g., a module capacitor).

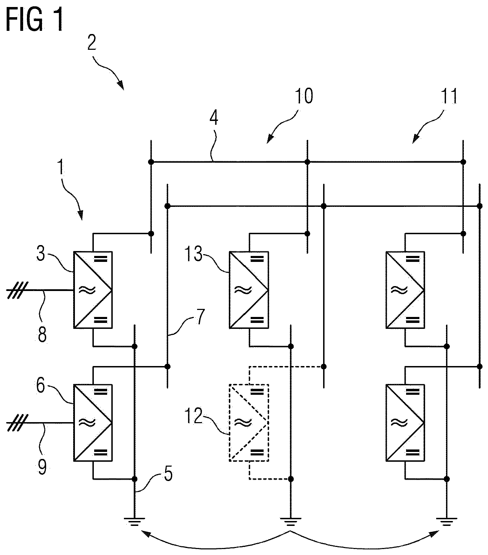

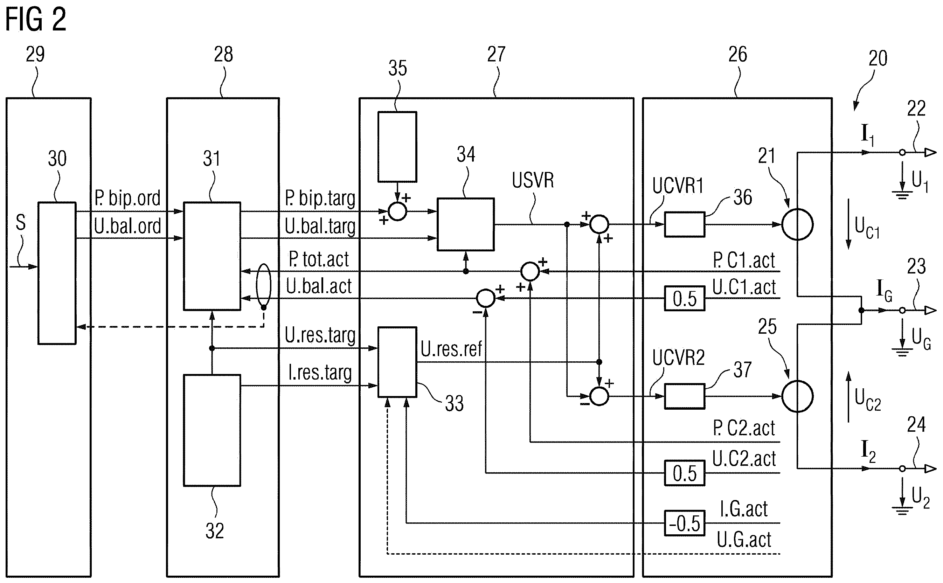

The invention will be further explained with reference to exemplary embodiments illustrated in the figures 1 and 2.
Figure 1 schematically shows an example of a bipole power exchange arrangement according to the invention;
Figure 2 schematically shows an example of a method according to the invention.

Figure 1 shows a first power exchange arrangement 1 in a DC network 2. The first power exchange arrangement 1 is a bipole converter station comprising a first converter 3 arranged between a positive DC pole 4 and a neutral pole 5 and a second converter 6 arranged between the neutral pole 5 and a negative pole 7. Both, the first and the second converter are on their respective AC side connected to an AC system 8, 9.

The DC network 2 further comprises a second bipole converter station 10 and a third bipole converter station 11. Once a second converter 12 of the second converter station 10 is blocked (whereas a first converter 13 of the second converter station 10 operates normally), the current of the first converter 13 will be injected into the neutral pole 5 system (in this example it is given by a ground return path). This current is detected by a measurement system of the first converter station 1 and affects its local control as described below.

Figure 2 shows a block diagram of a control architecture in a DC network (for example the DC network 2 of figure 1). A bipole power exchange arrangement 20 comprises a first converter unit 21 arranged between a first DC pole 22 and a neutral pole 23, and a second converter unit 25 arranged between the neutral pole 23 and a second (e.g., negative) DC pole 24.

A first box 26 schematically denotes a converter control on converter unit level. A second box 27 schematically denotes a station control on power exchange arrangement level. A third box 28 schematically denotes a grid control on operation level. A fourth box 29 schematically denotes a schedule control on dispatch level.

On the dispatch level, a load flow solver 30 obtains a grid schedule S as an input and provides a power order Pbipord and a voltage order Ubipord to a grid power and voltage control 31 on operation level (the orders are updated every 15-20 minute). As an additional input, the grid power and voltage control 31 receives a measured actual balanced voltages Ubalact and the measured total power Ptotact of both converters 21, 25 (DC side). A grid balancing control 32 can additionally provide a residual voltage target Urestarg and a residual current target Irestarg to a balancing adaption control 33 on power exchange arrangement level (e.g., converter station level).

A DC voltage control 34 receives as an input the power and voltage targets which may be additionally modified by a local power adaption control 35. According to the example shown in figure 1, the DC voltage control 34 receives as an input the actual power Pc1act and Pc2act measured at both poles of the converter station (DC side). As an output the DC voltage control 34 provides a symmetrical voltage reference Usvr for the first and second converter 21, 25.

The balancing adaption control 33 receives as an input a measured neutral pole current IGact and a measured neutral pole voltage UGact. As an output the balancing adaption control 33 provides a residual voltage reference Uresref. The residual voltage reference Uresref is calculated using a droop function providing a dependence between the neutral pole current IGact and the residual voltage reference Uresref.

A first converter voltage reference Ucvr1 is computed as a sum of the symmetrical voltage reference Usvr and the residual voltage reference Uresref. A converter control module 36 of the first converter 21 converts the first voltage reference Ucvr1 in switching instructions for the converter semiconductors of the first converter 21. A second converter voltage reference Ucvr2 is computed as a sum of the symmetrical voltage reference Usvr (multiplied by -1) and the residual voltage reference Uresref. A converter control module 37 of the second converter 25 converts the first voltage reference Ucvr2 in switching instructions for the converter semiconductors of the first converter 25. Thus, the first converter voltage reference Ucvr1 comprises two additive components, wherein one of the additive components is the residual voltage reference Uresref. Similarly, the second converter voltage reference Ucvr2 also comprises two additive components, wherein one of the additive components is the residual voltage reference Uresref.

## Claims

1. Method for operating a bipole power exchange arrangement (20) designed to exchange power between a power source and a DC network, comprising a first converter (21) arranged between a positive DC pole (22) and a neutral DC pole (23), a second converter arranged (25) between the neutral DC pole (23) and a negative DC pole (24), and a converter control (26, 27) providing a first converter voltage reference (Ucvr1) for the first converter (21) and a second converter voltage reference (Ucvr2) for the second converter (25), wherein the converter voltage references (Ucvr1, Ucvr2) each comprise at least two additive components (Usvr, Uresref), wherein one of the additive components is a residual voltage reference (Uresref) calculated based on a neutral pole current (IGact), **characterized in that**:
said residual voltage reference is calculated using a droop control function, and
a second additive component of the first converter voltage reference is a first symmetrical voltage reference and a second additive component of the second converter voltage reference is a second symmetrical voltage reference, wherein the absolute values of the first and second symmetrical components are equal.

2. Method according to claim 1, wherein the droop control function is chosen such that the residual voltage reference (Uresref) is equal to zero if the neutral pole current (IGact) is equal to zero.

3. Method according to any of the claims 1 or 2, wherein the residual voltage reference (Uresref) is calculated based on a neutral pole voltage.

4. Method according to claim 1, wherein the symmetrical voltage reference (Usvr) is calculated using a DC voltage-power droop control function.

5. Method according to any of the preceding claims, wherein the converter control further comprises a local power adaption control (35) for adjusting a power demand to short-term changes in local power generation.

6. Bipole power exchange arrangement (20) designed to exchange power between a power source and a DC network, comprising a first converter (21) arranged between a positive DC pole (22) and a neutral DC pole (23), a second converter (25) arranged between the neutral DC pole (23) and a negative DC pole (24), and a converter control (26, 27) configured to operate the arrangement (20) according to the method of any of the preceding claims.

7. Arrangement (20) according to claim 6, wherein the first converter (21) is a modular multilevel converters.

8. Arrangement (20) according to any of the claims 6 or 7, wherein the power source is an AC supply grid (8, 9).

9. Arrangement (20) according to any of the claims 6 or 7, wherein the first converter (21) is a DCDC converter.

## Patentansprüche

1. Verfahren zum Betreiben einer Bipolleistungsaustauschanordnung (20), die dazu ausgestaltet ist, Leistung zwischen einer Leistungsquelle und einem Gleichstromnetz auszutauschen, umfassend einen ersten Wandler (21), der zwischen einem positiven Gleichstrompol (22) und einem neutralen Gleichstrompol (23) angeordnet ist, einen zweiten Wandler, der zwischen dem neutralen Gleichstrompol (23) und einem negativen Gleichstrompol (24) angeordnet (25) ist, und eine Wandlersteuerung (26, 27), die eine erste Wandlerspannungsreferenz (Ucvr1) für den ersten Wandler (21) und eine zweite Wandlerspannungsreferenz (Ucvr2) für den zweiten Wandler (25) bereitstellt, wobei die Wandlerspannungsreferenzen (Ucvr1, Ucvr2) jeweils mindestens zwei additive Komponenten (Usvr, Uresref) umfassen, wobei eine der additiven Komponenten eine Restspannungsreferenz (Uresref) ist, die basierend auf einem neutralen Polstrom (IGact) berechnet wird, **dadurch gekennzeichnet, dass**:
die Restspannungsreferenz unter Verwendung einer Abweichungssteuerfunktion berechnet wird und eine zweite additive Komponente der ersten Wandlerspannungsreferenz eine erste symmetrische Spannungsreferenz ist und eine zweite additive Komponente der zweiten Wandlerspannungsreferenz eine zweite symmetrische Spannungsreferenz ist, wobei die absoluten Werte der ersten und der zweiten symmetrischen Komponente gleich sind.

2. Verfahren nach Anspruch 1, wobei die Abweichungssteuerfunktion derart ausgewählt ist, dass die Restspannungsreferenz (Uresref) gleich null ist, wenn der neutrale Polstrom (IGact) gleich null ist.

3. Verfahren nach einem der Ansprüche 1 oder 2, wobei die Restspannungsreferenz (Uresref) basierend auf einer neutralen Polspannung berechnet wird.

4. Verfahren nach Anspruch 1, wobei die symmetrische Spannungsreferenz (Usvr) unter Verwendung einer Gleichstromspannungs-Leistungsabfallsteuerfunktion berechnet wird.

5. Verfahren nach einem der vorhergehenden Ansprüche, wobei die Wandlersteuerung ferner eine lokale Leistungsadaptionssteuerung (35) zum Anpassen einer Leistungsanforderung an kurzfristige Änderungen in der lokalen Leistungserzeugung umfasst.

6. Bipolleistungsaustauschanordnung (20), die dazu ausgestaltet ist, Leistung zwischen einer Leistungsquelle und einem Gleichstromnetz auszutauschen, umfassend einen ersten Wandler (21), der zwischen einem positiven Gleichstrompol (22) und einem neutralen Gleichstrompol (23) angeordnet ist, einen zweiten Wandler (25), der zwischen dem neutralen Gleichstrompol (23) und einem negativen Gleichstrompol (24) angeordnet ist, und eine Wandlersteuerung (26, 27), die dazu konfiguriert ist, die Anordnung (20) gemäß dem Verfahren nach einem der vorhergehenden Ansprüche zu betreiben.

7. Anordnung (20) nach Anspruch 6, wobei der erste Wandler (21) ein modularer Multilevel-Wandler ist.

8. Anordnung (20) nach einem der Ansprüche 6 oder 7, wobei die Leistungsquelle ein Wechselstrom-Versorgungsnetz (8, 9) ist.

9. Anordnung (20) nach einem der Ansprüche 6 oder 7, wobei der erste Wandler (21) ein Gleichstrom/Gleichstrom-Wandler ist.

## Revendications

1. Procédé de fonctionnement d'un agencement d'échange de puissance bipolaire (20) conçu pour échanger de la puissance entre une source de puissance et un réseau à courant continu (CC), comprenant un premier convertisseur (21) agencé entre un pôle CC positif (22) et un pôle CC neutre (23), un second convertisseur (25) agencé entre le pôle CC neutre (23) et un pôle CC négatif (24), et une commande de convertisseur (26, 27) fournissant une première référence de tension de convertisseur (Ucvr1) pour le premier convertisseur (21) et une seconde référence de tension de convertisseur (Ucvr2) pour le second convertisseur (25), dans lequel les références de tension de convertisseur (Ucvr1, Ucvr2) comprennent chacune au moins deux composantes additives (Usvr, Uresref), l'une des composantes additives étant une référence de tension résiduelle (Uresref) calculée sur la base d'un courant de pôle neutre (IGact), **caractérisé en ce que** :
laquelle référence de tension résiduelle est calculée à l'aide d'une fonction de commande de statisme, et une seconde composante additive de la première référence de tension de convertisseur est une première référence de tension symétrique et une seconde composante additive de la seconde référence de tension de convertisseur est une seconde référence de tension symétrique, dans lequel les valeurs absolues des première et seconde composantes symétriques sont égales.

2. Procédé selon la revendication 1, dans lequel la fonction de commande par statisme est choisie de telle sorte que la référence de tension résiduelle (Uresref) soit égale à zéro si le courant de pôle neutre (IGact) est égal à zéro.

3. Procédé selon l'une quelconque des revendications 1 ou 2, dans lequel la référence de tension résiduelle (Uresref) est calculée sur la base d'une tension de pôle neutre.

4. Procédé selon la revendication 1, dans lequel la référence de tension symétrique (Usvr) est calculée à l'aide d'une fonction de commande de statisme de tension continue-puissance.

5. Procédé selon l'une quelconque des revendications précédentes, dans lequel la commande de convertisseur comprend en outre une commande d'adaptation de puissance locale (35) pour ajuster une demande de puissance à des changements à court terme de la production de puissance locale.

6. Agencement d'échange de puissance bipolaire (20) conçu pour échanger de la puissance entre une source de puissance et un réseau à courant continu (CC), comprenant un premier convertisseur (21) agencé entre un pôle CC positif (22) et un pôle CC neutre (23), un second convertisseur (25) agencé entre le pôle CC neutre (23) et un pôle CC négatif (24), et une commande de convertisseur (26, 27) configurée pour faire fonctionner l'agencement (20) selon le procédé de l'une quelconque des revendications précédentes.

7. Agencement (20) selon la revendication 6, dans lequel le premier convertisseur (21) est un convertisseur multiniveaux modulaire.

8. Agencement (20) selon l'une quelconque des revendications 6 ou 7, dans lequel la source de puissance est un réseau d'alimentation CA (8, 9).

9. Agencement (20) selon l'une quelconque des revendications 6 ou 7, dans lequel le premier convertisseur (21) est un convertisseur CC-CC.
